# EUROPEAN PATENT SPECIFICATION

(11) **EP 2 356 166 B1**
(45) Date of publication and mention of the grant of the patent: **12.11.2014**
(21) Application number: 09768587.9
(22) Date of filing: 10.12.2009
(51) Int. Cl.: C08G 18/79, C09D 167/02, C08G 63/685, C08G 18/32, C08G 18/72, C09D 175/04, C08G 59/42, C09D 163/00

(54) **PROCESS FOR THE PREPARATION OF POLYURETDIONE RESINS**
VERFAHREN ZUR HERSTELLUNG VON POLYURETDIONHARZEN
PROCÉDÉ DE PRÉPARATION DE RÉSINES DE POLYURETDIONE

(30) Priority: 10.12.2008 US 201426 P; 10.12.2008 US 201374 P
(43) Date of publication of application: 17.08.2011
(73) Proprietor: Coatings Foreign IP Co. LLC, Wilmington, DE 19801 (US)
(72) Inventor: FLOSBACH, Carmen, D-42287 Wuppertal (DE); TEMELTAS, Engin, 51381 Leverkusen (DE)
(74) Representative: Maiwald Patentanwalts GmbH
(86) International application number: PCT/US2009/067461
(87) International publication number: WO 2010/068732

(56) References cited:
- US-A- 4 496 684
- US-A- 5 786 419
- US-A1- 2008 194 787

## Description

### Field of the Invention

The present invention is directed to a process for the preparation of polyuretdione resins for the use in powder coating compositions providing higher crosslinking densitiy and high flexibility in combination with excellent weather resistance of the coating layers and high processability of the powder coating compositions.

### Description of Prior Art

Epoxy, polyester and acrylic resin binders are well-known for the use in thermal curable powder coating compositions. For example, hydroxyl functional polyesters are curable with isocyanates to result in polyurethane powder coatings, see D. Bates, The Science of Powder Coatings, Volume 1, London, 1990, pages 56, 276-277, 282.

Combinations of different resin binders and curing agents are investigated to receive specific desired properties of the coatings on different substrate surfaces.

EP-A 1209182, EP-A 1323757 and WO 02/50147 refer to coating compositions based on specific urethane acrylates or a mixture of different polymers, for example, different urethane acrylates, wherein the compositions are cured by ultra violet (UV) radiation to provide coatings with good mechanical properties and flexibility.

Thermal curable powder coating compositions based on urethane (meth)acrylates or specific polyester urethanes are disclosed in WO 01/25306, EP-A 702040, EP-A 410242 and WO 95/35332 and refer to good storage stability and increased weather resistance of the coatings.

Uretdione based powder resins are used as curing agent (hardener) for hydroxyl-functional polyester coating systems. Such uretdione based resins are amorphous, and they are produced from isophorone diisocyanate. In the US 5795950, crystalline polyuretdiones are disclosed used as hardener in powder coating compositions. The crystalline polyuretdiones are not able to provide higher crosslinking densitiy.

While current state of the art discloses powder coating compositions having good technology properties, they do not offer in particular the level of high flexibility and flowability in combination with a potential of building thin films. Accordingly, there is a need for powder coating compositions, and methods of application thereof, that meet those requirements.

### Summary of the Invention

The present invention provides a powder coating composition according to claim 1.

The process for the preparation of the carboxyl functional polyuretdione resin used in the powder coating composition according to the invention provides a carboxyl functional polyuretdione resin, particularly for the use as hardener (crosslinker, curing agent) providing a higher crosslinking densitiy in spite of low number-average molar mass of the carboxyl functional polyuretdione resin, and provide desired technological properties of the powder coatings, in particular, low curing temperatures, thin films and high flexibility in combination with an excellent weather resistance of the coating layers. Additionally, the powder coating composition comprising the carboxyl functional polyuretdione resin according to the invention can be cured without release of any blocking agents usually used in the isocyanate chemistry.

### Detailed Description of the Invention

The features and advantages of the present invention will be more readily understood, by those of ordinary skill in the art, from reading the following detailed description. It is to be appreciated those certain features of the invention, which are, for clarity, described above and below in the context of separate embodiments, may also be provided in combination in a single embodiment. Conversely, various features of the invention that are, for brevity, described in the context of a single embodiment, may also be provided separately or in any sub-combination. In addition, references in the singular may also include the plural (for example, "a" and "an" may refer to one, or one or more) unless the context specifically states otherwise.

Slight variations above and below the stated ranges of numerical values can be used to achieve substantially the same results as values within the ranges. Also, the disclosure of these ranges is intended as a continuous range including every value between the minimum and maximum values.

Particularly the present invention refers to a powder coating composition wherein the powder coating composition comprising 10 to 80 wt%, preferably 20 to 70 wt%, of at least one carboxyl functional polyuretdione resin of the invention as hardener, the wt% being based on the total weight of the powder coating composition.

The at least one carboxyl functional polyuretdione resin of the invention has a carboxyl value in the range of 20 to 300 mg KOH/g, particularly 50 to 250 mg KOH/g.

The term carboxyl value mentioned in this description is defined as the mg of potassium hydroxide required to neutralise the acid groups of the polyester, according to DIN EN ISO 2114.

The at least one carboxyl functional polyuretdione resin of the invention may have a melting temperature of 60 to 180°C, in particular 80 to 160°C. The melting temperatures are not in general sharp melting points, but instead the upper end of melting ranges with a breadth of, for example, 30 to 150°C. In such case, the at least one carboxyl functional polyuretdione resin of the invention is very slightly, if at all, soluble in organic solvents conventional used in coatings and/or in water, the solubility amounting, for example, to less than 10, in particular less than 5 g per litre of butyl acetate or water at 20°C.

The melting ranges and thus the melting temperatures mentioned in this description are determined by DSC (differential scanning calorimetry) at heating rates of 10 K/min according to DIN 53765-B-10.

Also, the at least one carboxyl functional polyuretdione resin according to the invention may have a glass transition temperature Tg in the range of 25 to 80°C, in particular 30 to 70°C, the Tg determined according to ISO 11357-2.

The carboxyl functional polyuretdione resin is produced in a first step, by reacting at least one isocyanate (NCO) functional uretdione with at least one alcohol in such a way that the ratio of free NCO groups to hydroxyl groups is in a range of 0.5 :1 to 0.5 : 3, preferably 0.5 :1 to 0.5 : 2, and, in a second step, by reacting the resulted hydroxyl functional polyuretdione with di-and/or polyfunctional acid(s) and/or their anhydride(s).

Suitable NCO functional uretdiones are prepared by methods of dimerization of polyisocyanates, known by a person skilled in the art, for example, by reacting polyisocyanates in non-reacting solvents in the presence of reaction catalysts, at temperatures in the range of, for example, 0 to 130°C, see, for example, H.J. Laas, R. Halpaap, J. Pedain, "Zur Synthese aliphatischer Polyisocyanate - Lackpolyisocyanate mit Biuret-, Isocyanurat- oder Urtdionstruktur", J. Prakt. Chemie 336, (1994), 185.

Examples of NCO functional uretdiones are uretdiones based on aliphatic diisocyanates such as hexamethylene diisocyanate (HDI), 1,4-cyclohexandiisocyanate, biscyclohexylmethandiisocyanate, trimetyhlhexyldiisocyanate, isophorone diisocyanate (IPDI), uretdiones based on aromatic structures known to those skilled in the art like diphenylmethandiisocyanate (MDI). The uretdiones can contain other structures like isocyanurate structures besides the uretdione structure. Preferred are uretdiones based on aliphatic diisocyanates, for example, based on HDI and/or IPDI.

The alcohols can be linear and/or branched alcohols. Diols and polyols, such as triols, are particularly suitable, on its own, or in mixture.

Diols and polyols suitable for the production of the polyuretdione resins are not only diols and polyols in the form of low molar mass compounds defined by empirical and structural formula but also oligomeric or polymeric diols or polyols with number-average molar masses of, for example, up to 800, for example, corresponding hydroxyl-functional polyethers, polyesters and/or polycarbonates. Low molar mass diols and/or polyols defined by an empirical and structural formula are, however, preferred.

The person skilled in the art selects the nature and proportion of the isocyanate (NCO) functional uretdione(s) and alcohols in such a manner that a hydroxyl functional polyuretdione resin is obtained.

Mono alcohols can be used particularly as chain stopper to terminate the polymer chain. Examples of mono alcohols are ethanol, propanol, butanol, pentanol, hexanol, dekanol.

Examples of linear and branched diols are ethanediols, ethylenglycol, isomeric propandiols and butandiols, 1,2-propandiol, 1,3-propandiol, 1,3-butandiol, 1,4-butandiol, 1,4-pentandiol, 1,5-pentandiol, 1,2-hexandiol, 1,5-hexandiol, 2,5-hexandiol, 1,6-hexandiol, 1,10-dekandiol, 1,12-dodekandiol, neopentylglykol, also (cyclo)aliphatic, aromatic or araliphatic diols with a molar mass in the range of, for example, 62 to 600 such as 1,4-cyclohexanedimethanol, hydrogenated bisphenol A, dimer fatty alcohol, telechelic (meth)acrylic polymer diols, polyester diols, polyether diols, polycarbonate diols, each with a number-average molar mass of, for example, up to 800, butylethylpropanediol, the isomeric cyclohexanediols, the isomeric cyclohexanedimethanols, tricyclodecanedimethanol, pentaerythritol. Preferred is the use of linear diols, most preferred are 1,2-ethanediol, 1,3-propandiol,1,4-butandiol,1,5-pentandiol,1,6-hexandiol.

The term "(cyclo)aliphatic" used in the description and the claims encompasses cycloaliphatic, linear aliphatic, branched aliphatic and cycloaliphatic with aliphatic residues. The aromatic or araliphatic diols comprise diols with aromatically and/or aliphatically attached hydroxyl groups.

Examples of polyols are glycerol, trimethylolethane, trimethylolpropane or pentaerythritol.

Additionally, monomers of isocyanates can be used for the preparation of the hydroxyl functional polyuretdione resins of the invention. Examples of such isocyanates are diisocyanates, for example, HDI, IPDI, hydrogenated MDI. For such cases, the hydroxyl functional polyuretdione resin binders may be produced by reacting the monomers of isocyanates with the alcohol(s) in such a way that the content of free NCO groups to the content of hydroxyl groups is in a range of 0.5 :1 to 0.5 : 2, preferably 0.5 :1 to 0.5 : 1.5.

The reaction conditions in step a) are selected in such a way that the ring opening of the uretdione ring can be avoided, that means, at reaction temperatures in the range of, for example, 60 to 140°C.

In the second step, the resulted hydroxyl functional polyuretdione is reacted with di-and/or polyfunctional acid(s) and/or their anhydride(s) to produce the carboxyl functional polyuretdione resin having the above mentioned acid value. The person skilled in the art selects the nature and proportion of the di-and polyfunctional acids(s) and/or anhydride(s) in such a manner that the carboxyl functional polyuretdione resin with the above-mentioned carboxyl value is obtained. That means, using a ratio of hydroxyl group to acid group of the components in a range of 1:1,5 to 1:3.

Examples of di- and polyfunctional acids(s) and/or anhydride(s) are adipic acid, succinic acid, azelaic acid, isomeric cyclohexane dicarboxylic acids, dodecanedioic acid, sebacic acid, phthalic acid, terephthalic acid, isophthalic acid and/or there anhydrides. Preferred are succinic acid,and/or carboxylic anhydrides like hexahydrophthalic anhydride, methyl-hexahydrophthalic anhydride, trimellitic anhydride, phthalic anhydride, dodecanedioic (poly)anhydride.

The carboxy functional polyuretdione resin according to the invention may also be produced, partially, by reacting isocyanate functional uretdione(s) with hydroxyl functional carboxylic acids like, for example, hydroxyacetic acid, 2-hydroxy succinic acid, 2-hydroxy-1,2,3-propane tricarboxylic acid and/or derivatives of lactic acid.

The preparation of the carboxyl functional polyuretdione resin may be done in apparatus known for the preparation of polyurethanes, in general, as known to a person skilled in the art.

The carboxyl functional polyuretdione resin may have a number-average molar mass in a range of 700 to 8000, preferred 700 to 5000, and particularly preferred 800 to 3000.

All the number-average molar mass data stated in the present description are number-average molar masses determined or to be determined by gel permeation chromatography (GPC) with divinylbenzene-crosslinked polystyrene as the immobile phase, tetrahydrofuran as the liquid phase and polystyrene standards, as defined in ISO 13885-1.

The resulted carboxyl functional polyuretdione resin does not require working up and may be used directly as carboxyl functional polyuretdione resin of the invention. The resin may be produced solvent-free or in presence of a solvent that can be distilled after the synthesis of the resin, as known in the art.

The carboxyl functional polyuretdione resin may be used as curing binder resin in a powder coating composition. This means, that it can be used with at least one binder resin and, optionally with further curing agents, usually used in powder coating compositions and as known to a person skilled in the art.

The at least one binder resin can be selected from the group consisting of epoxy functional binder resin(s) and hydroxyl functional binder resin(s) and can be used in a range of 20 to 90 wt%, preferably 30 to 80 wt%, the wt% based on the total weight of the powder coating composition.

Hydroxyl functionalities, possibly resulted by the use of epoxy functional binder resin(s), or hydroxyl functionalities of the hydroxyl functional binder resin(s), may be reacted with the polyuretdione group of the polyuretdione resin of the invention resulting in an additional curing, and therefore, in a high crosslinking density.

Examples of epoxy functional binder resin(s) are epoxy functional acrylic resins having an epoxy equivalent value of, for example, 300 to 1000 g/mol, bisphenol A diglycidylether resins, known as such by a person skilled in the art

Examples of hydroxyl functional binder resin(s) are polyester, polyurethane and (meth)acrylic copolymer resins and hybrid binder resins having hydroxyl values of, for example, 60 to 300 mg of KOH/g and number-average molar masses of, for example, 500 to 10000, known as such by a person skilled in the art. Suitable polyesters can be hydroxyl functional polyesters produced in a conventional manner by reacting polycarboxylic acids, and the anhydrides and/or esters thereof with polyalcohols, as is, for example, described in D.A. Bates, The Science of Powder Coatings, volumes 1 & 2, Gardiner House, London, 1990.

The powder coating composition comprising the carboxyl functional polyuretdione resin makes it possible to cure the resulting coatings without release of any blocking agents usually used in the isocyanate chemistry.

The carboxyl functional polyuretdione resin can also be used as co-hardener in the powder coating composition according to the invention together with further binder resins and optionally their curing agents usually used in powder coating compositions and as known to a person skilled in the art. Examples for these different curing mechanisms are systems based on epoxy/acid addition, hydroxyl/blocked polyisocyanate, hydroxyl/esterification, UV-curing as known to those skilled in the art. Examples of such binder resins are polyester, polyurethane and (meth)acrylic copolymer resins and hybrid binders derived from these classes of binders, for example, with hydroxyl values of, for example, 20 to 300 mg of KOH/g and number-average molar masses of, for example, 500 to 10000. Examples of curing agents for these further resin binders are Vestagon BF 1540, Crelan® EF 403, Crelan® LP LAS 3969. The coating composition according to the invention may contain the further binder resins and their curing agents in amounts in a range up to 90 wt%, preferably, in a range of 50 to 80 wt%, the wt% being based on the total weight of the powder coating composition.

The further binder resins and curing agents may be crystalline and/or armorphous components.

The coating composition of the present invention may further comprise one or more pigments, fillers and/or coating additives known to those skilled in the art.

Additives are selected from the group consisting of flow control agents, dispersants, thixotropic agents, adhesion promoters, antioxidants, light stabilizers, anticorrosion agents, inhibitors, catalysts, levelling agents, wetting agents, anticratering agents, and mixtures thereof. Catalysts, suitable for the curing can be used, for example, zinc hexadecanoat, tin hexadecanoat, zinc acetylacetonate, or zinc acetate. The additives are used in conventional amounts known by the person skilled in the art, for example, 0.1 to 10 wt%, based on the total wt% of the coating composition.

In case of dual cure coating compositions, usually used photoinitiators known to a person skilled in the art are contained therein.

The coating compositions may also contain transparent pigments, color-imparting and/or special effect-imparting pigments and/or fillers, in amounts of, for example, 5 to 60 wt%, preferred 5 to 40 wt%, based on the total wt% of the coating composition. Suitable color-imparting pigments are any conventional coating pigments of an organic or inorganic nature. Examples of inorganic or organic color-imparting pigments are titanium dioxide, iron oxide pigments, carbon black, azo pigments, phthalocyanine pigments, quinacridone pigments and pyrrolopyrrole pigments. Examples of special effect pigments are metal pigments, for example, of aluminum, copper or other metals, interference pigments, such as, for example, metal oxide-coated metal pigments, for example, iron oxide-coated aluminum, coated mica, such as, for example, titanium dioxide-coated mica, graphite effect-imparting pigments, iron oxide in flake form, liquid crystal pigments, coated aluminum oxide pigments, coated silicon dioxide pigments. Examples of fillers are silicon dioxide, aluminum silicate, barium sulfate, calcium carbonate and talc.

Under heat the powder coating composition which comprises the at least one carboxyl functional polyuretdione resin of the invention, having a melting temperature of 60 to 180°C, in particular 80 to 160°C show a steep decrease in viscosity in the melting range of its components. The viscosity of the powder coating composition just slightly decreases further by increasing the temperature. The melt viscosity of the powder coating composition of the invention is very low. Measured with a, for example, rotational rheometer, according to DIN 53019, the minimum melt viscosity is below 100 Pas. Preferred are powder coating compositions of the invention having a melt viscosity of below 50 Pas, particularly below 10 Pas, for example, 1 to 8 Pas.

The powder coating composition comprising the carboxyl functional polyuretdione resin of the invention comprising preferably
(A) 10 to 80 wt% of at least one carboxyl functional polyuretdione resin as described in the invention as hardener,
(B) 20 to 90 wt% of at least one binder resin selected from the group consisting of epoxy functional binder resin(s) and hydroxyl functional binder resin(s),
(C) 0 to 90 wt% of at least one resin binder and optionally at least one curing agent, different from (A) and (B), and
(D) 0.1 to 60 wt% of pigments, fillers and/or coating additives, the wt% amounts based on the total weight of the powder coating composition (A) to (D), wherein the at least one carboxyl functional polyuretdione resin binder (A) having a carboxyl value in the range of 20 to 300 mg KOH/g, particularly 50 to 250 mg KOH/g.

Particularly preferred is a powder coating composition comprising the carboxyl functional polyuretdione resin of the invention comprising
(A) 20 to 70 wt% of at least one carboxyl functional polyuretdione resin as described in the invention as hardener,
(B) 30 to 80 wt% of at least one binder resin selected from the group consisting of epoxy functional binder resin(s) and hydroxyl functional binder resin(s),
(C) 1 to 50 wt% of at least one resin binder and optionally at least one curing agent, different from (A) and (B), and
(D) 5 to 50 wt% of pigments, fillers and/or coating additives,
the wt% amounts based on the total weight of the powder coating composition (A) to (D), wherein the at least one carboxyl functional polyuretdione resin binder (A) having a carboxyl value in the range of 20 to 300 mg KOH/g, particularly 50 to 250 mg KOH/g.

The components of the powder coating composition are mixed, extruded and ground by conventional techniques employed in the powder coatings art familiar to a person of ordinary skill in the art. Typically, all of the components of the powder coating formulation are added to a mixing container and mixed together. The blended mixture is then melt blended, for example, in a melt extruder. The extruded composition is then cooled and broken down and ground to a powder. The ground powder is subsequently screened to achieve the desired particle size, for example, an average particle size (mean particle diameter) of 20 to 200 µm, determined by means of laser diffraction.

It is possible that a predetermined amount of a component of the powder coating components be added, for example, to the polyuretdione resin (A) and further components of the composition according to the invention, and then premixed. The premix can then be extruded, cooled, and thereafter pulverized and classified.

The powder coating composition may also be prepared by spraying from supercritical solutions, NAD "non-aqueous dispersion" processes or ultrasonic standing wave atomization process.

Furthermore, specific components of the powder coating composition, for example, additives, pigments, fillers, may be processed with the finished powder coating particles after extrusion and grinding by a "bonding" process using an impact fusion. For this purpose, the specific components may be mixed with the powder coating particles. During blending, the individual powder coating particles are treated to softening their surface so that the components adhere to them and are homogeneously bonded with the surface of the powder coating particles. The softening of the powder particles' surface may be done by heat treating the particles to a temperature, e.g., 40 to 100°C, dependent from the melt behavior of the powder particles. After cooling, the mixture the desired particle size of the resulted particles may be proceeded by a sieving process.

The powder coating composition comprising the carboxyl functional polyuretdione resin of the invention can be readily applied to metallic and non-metallic substrates. The composition can be used to coat metallic substrates including, but not limited to, steel, brass, aluminum, chrome, and mixtures thereof, and also to other substrates including, for example, heat-sensitive substrates, such as, substrates based on wood, plastics and paper, and other substrates based, for example, on glass and ceramics.

Depending upon the requirements placed upon the coated substrate, the surface of the substrate may be subjected to a mechanical treatment, such as, blasting followed by, in case of metal substrates, acid rinsing, or cleaning followed by chemical treatment.

The powder coating composition may be applied by, e.g., electrostatic spraying, electrostatic brushing, thermal or flame spraying, fluidized bed coating methods, flocking, tribostatic spray application and the like, also coil coating techniques, all of which are known to those skilled in the art.

Prior to applying the coating composition of the invention the substrate may be grounded but not pre-heated, so that the substrate is at an ambient temperature of about 25°C (77°F).

In certain applications, the substrate to be coated may be pre-heated before the application of the powder composition according to the invention, and then either heated after the application of the powder composition or not. For example, gas is commonly used for various heating steps, but other methods, e.g., microwaves, infra red (IR), near infra red (NIR) and/or ultra violet (UV) irradiation are also known. The preheating can be to a temperature ranging from 60 to 260°C (338 to 500°F) using means familiar to a person of ordinary skill in the art.

After being applied, the coating can be cured or post-cured by exposing by convective, gas and/or radiant heating, e.g., IR and/or NIR irradiation, as known in the art, to temperatures of, e.g., 100°C to 300°C (212 to 572°F), preferably, 140°C to 200°C, object temperature in each case, for, e.g., 2 to 20 minutes in case of pre-heated substrates, and, for example, 4 to 30 minutes in case of non-pre-heated substrates.

After being cured, the coated substrate is typically subjected to, for example, either air-cooling, or water quenching to lower the temperature to between, for example, 35 and 90°C (95 and 194°F).

The substrate is coated with an effective amount of the present powder coating composition so as to produce a dry film thickness that ranges, for example, from 10 to 300 µm, preferably 20 to 100 µm, particularly from 10 to 60 µm for very thin film coatings.

The powder coating composition comprising the carboxyl functional polyuretdione resin of the invention can be applied directly on the substrate surface as a primer coating or on a layer of a primer which can be a liquid or a powder based primer. The powder coating compositions according to the invention can also be applied as a coating layer of a multilayer coating system based on liquid or powder coats, for example, as clear coat layer applied onto a color-imparting and/or special effect-imparting base coat layer or as pigmented one-layer coat applied onto a prior coating.

### Examples

### Example 1

### Preparation of an Uretdione of the Invention

**Table 1: Formulation**

| **Component** | **Parts per weight** |
|---|---|
| Hexanediol-1,6 | 34 |
| Hexamethylene diisocyanate (Desmodur® H, Bayer) | 24 |
| Hexamethylenediisocyanate-urethdione (Desmodur® N 3400, Bayer) | 28 |
| Succinic anhydride | 14 |

34 parts per weight of 1,6-Hexanediol were placed into a glass reactor equipped with stirrer, thermocouple and dropping funnel and heated to 60°C. To the melt a mixture of 24 parts per weight of Hexamethylenediisocyanate and 28 parts per weight of Hexamethylenediisocyanate uretdion were dosed in such a way that 120°C was not ecxceeded. After an NCO-value of <0,1 % was reached 14 parts per weight of succinic acid were added in such a way that 120°C is not exceeded. After completion of addition the reaction mixture was kept at 120°C till the succinic acid reacted and a clear resin melt resulted. The resin was filled and solidified after cooling.

Data of the resulted carboxyl functional polyuretdione resin:
Acid number (calculated): 81 mg KOH / g
Uretdione content (calculated): 5% per molecule
Molecular weight Mn (calculated): 1670 g/mol
Melting temperature (DSC): 80 - 135°C

### Example 2

### Preparation of a Powder Coating Composition of the Invention and of Prior Art

**Table 2: Powder Coating Composition of the Invention**

| **Component** | **Parts per weight** |
|---|---|
| Uretdione of Example 1 | 67 |
| Epoxy resin (Fineclad® AC 9030, DIC; epoxy equivalent weight: 325 g / mol) | 32 |
| Degassing agent Benzoine | 0,3 |
| Flow additive Resiflow PV 98 | 0,7 |

The parts per weight of uretdione of Example 1 and the parts of the epoxy resin are mixed together with benzoine and the flow agent in a Henschel mixer (mixing for 3 min at 1500 rotations/min, max. temperature 35°C). Then it was extruded on Extruder OMC with 250 rotations/min at an extruder temperature of 83-94°C. The extrudate is cooled down, broken and milled on a Retsch lab mill to a fine powder.

**Table 3: Powder Coating Composition of Prior Art**

| **Component** | **Parts per weight** |
|---|---|
| Uretdione hardener (Vestagon® BF 1540, Evonik; Tg: 79°C) | 21,4 |
| OH-Polyester (Dynacoll® 7360, Evonik, OH-number: 31 mg KOH / g) | 77,6 |
| Catalyst (Zinc acetyl acetonate) | 1 |

The composition of Table 3 is preprared accordingly from the components of Table 3

### Example 3

### Application and Tests

Application: on aluminium plate
Hardening: 30 minutes at 140°C and 20 minutes at 160°C

**Tabelle 4: Test results**

| **Test** | **Powder composition of Invention** | **Powder Composition of Prior Art** |
|---|---|---|
| Film thickness (µm) | 48-60 | 70-80 |
| Flow | very good | good |
| Impact test (22 ip) (ASTM D 2794) | passed | failed |
| Flexibility: Ericsson-cupping (DIN EN ISO 1520) | 5,3 | 2 |
| Appearance | very smooth film | smooth film |

## Claims

1. A powder coating composition comprising
(A) 10 to 80 wt% of at least one carboxyl functional polyuretdione resin as hardener, prepared by a process comprising the steps
a) reacting at least one isocyanate NCO functional uretdione with at least one alcohol in a ratio of free NCO groups to hydroxyl groups in a range of 0.5 :1 to 0.5 : 3, and
b) reacting the resulted hydroxyl functional polyuretdione with di-and/or polyfunctional acid(s) and/or their anhydride(s),
wherein the resulted carboxyl functional polyuretdione resin having a carboxyl value in the range of 20 to 300 mg KOH/g, the carboxyl value defined according to DIN EN ISO 2114;
(B) 20 to 90 wt% of at least one binder resin selected from the group consisting of epoxy functional binder resin(s) and hydroxyl functional binder resin(s),
(C) 0 to 90 wt% of at least one resin binder and optionally at least one curing agent, different from (A) and (B), and
(D) 0.1 to 60 wt% of pigments, fillers and/or coating additives,
the wt% amounts based on the total weight of the powder coating composition (A) to (D).

2. The composition according to claim 1 wherein the carboxyl functional polyuretdione resin having a number-average molar mass in a range of 700 to 8000, the number-average molar mass determined by gel permeation chromatography (GPC) with divinylbenzene-crosslinked polystyrene as the immobile phase, tetrahydrofuran as the liquid phase and polystyrene standards, as defined in ISO 13885-1.

3. The composition according to claim 1 and 2 wherein the carboxyl functional polyuretdione resin has a melting temperature of 60 to 180°C, wherein the melting temperature is not in general sharp melting points, but instead the upper end of melting ranges with a breadth of 30 to 150°C, determined by DSC (differential scanning calorimetry) at heating rates of 10 K/min according to DIN 53765-B-10.

4. The composition according to claims 1 to 3 wherein NCO functional uretdiones based on aliphatic diisocyanates are preferred.

5. The composition according to claims 1 to 4 wherein succinic acid and/or carboxylic anhydrides are preferred as di-and/or polyfunctional acid(s) and/or their anhydride(s).

6. A method for coating a substrate applying a powder coating composition according to claims 1 to 5 on the substrate and curing the applied powder coating composition.

7. A substrate coated with the powder coating composition of claims 1 to 5.

## Patentansprüche

1. Pulverbeschichtungszusammensetzung umfassend
(A) 10 bis 80 Gew.-% mindestens einen carboxyfunktionellen Polyuretdionharzes als Härtungsmittel, hergestellt durch ein Verfahren umfassend die Schritte
(a) Reagieren mindestens eines NCO-funktionellen Isocyanaturetdions mit mindestens einem Alkohol in einem Verhältnis von freien NCO-Gruppen zu Hydroxygruppen in einem Bereich von 0,5 : 1 bis 0,5 : 3, und
b) Reagieren des resultierenden hydroxyfunktionellen Polyuretdions mit di- und/oder polyfunktioneller Säure bzw. polyfunktionellen Säuren und/oder ihrem Anhydrid bzw. ihren Anhydriden,
wobei das resultierende carboxyfunktionelle Polyuretdionharz einen Carboxylwert im Bereich von 20 bis 300 mg KOH/g aufweist, wobei der Carboxylwert DIN EN ISO 2114 gemäß definiert wird;
(B) 20 bis 90 Gew.-% mindestens eines Bindemittelharzes ausgewählt aus der Gruppe bestehend aus epoxyfunktionellen Bindemittelharz(en) und hydroxyfunktionellen Bindemittelharz(en),
(C) 0 bis 90 Gew.-% mindestens eines Harzbindemittels und wahlweise mindestens eines Aushärtungsmittels, das von (A) und (B) verschieden ist, und
(D) 0,1 bis 60 Gew.-% Pigmente, Füllstoffe und/oder Beschichtungszusatzmittel, wobei die Gew.-% auf das Gesamtgewicht der Pulverbeschichtungszusammensetzung (A) bis (D) bezogen sind.

2. Zusammensetzung nach Anspruch 1, wobei das carboxyfunktionelle Polyuretdion eine zahlendurchschnittliche Molmasse in einem Bereich von 700 bis 8000 aufweist, wobei die zahlendurchschnittliche Molmasse durch Gelpermeationschromatographie (GPC) mit mit Divinylbenzol vernetztem Polystyrol als immobile Phase, Tetrahydrofuran als flüssige Phase und Polystyrolstandards wie in ISO 13885-1 definiert, bestimmt wird.

3. Zusammensetzung nach Anspruch 1 und 2, wobei das carboxyfunktionelle Polyuretdionharz eine Schmelztemperatur von 60 bis 180 °C aufweist, wobei die Schmelztemperatur im Allgemeinen kein scharf definierter Schmelzpunkt, sondern statt dessen das obere Ende von Schmelzbereichen mit einer Breite von 30 bis 150 °C, durch DSC (Differential-Scanning-Kalorimetrie) mit Erhitzungsraten von 10 K/min DIN 53765-B-10 gemäß bestimmt, ist.

4. Zusammensetzung nach den Ansprüchen 1 bis 3, wobei NCO-funktionelle Uretdione auf der Basis aliphatischer Diisocyanate bevorzugt werden.

5. Zusammensetzung nach den Ansprüchen 1 bis 4, wobei Bernsteinsäure und/oder Carbonsäureanhydride als di- und/oder polyfunktionelle Säure(n) und/oder ihr(e) Anhydrid(e) bevorzugt werden.

6. Verfahren zum Beschichten eines Substrats durch Aufbringen einer Pulverbeschichtungszusammensetzung nach den Ansprüchen 1 bis 5 auf das Substrat und Aushärten der aufgebrachten Pulverbeschichtungszusammensetzung.

7. Substrat, das mit der Pulverbeschichtungszusammensetzung nach den Ansprüchen 1 bis 5 beschichtet ist.

## Revendications

1. Composition de revêtement en poudre comprenant
(A) de 10 à 80 % en poids d'au moins une résine de polyuretdione à fonctionnalité carboxyle en tant qu'agent durcissant, préparée par un procédé comprenant les étapes consistant à
a) faire réagir au moins une uretdione à fonctionnalité isocyanate NCO avec au moins un alcool selon un rapport de groupes NCO libres aux groupes hydroxyle compris dans la plage allant de 0,5:1 à 0,5:3, et
b) faire réagir la poluretdione à fonctionnalité hydroxyle résultante avec un ou plusieurs acides di- et/ou polyfonctionnels et/ou leurs anhydrides,
la résine de poluretdione à fonctionnalité carboxyle résultante ayant un indice carboxyle compris dans la plage allant de 20 à 300 mg de KOH/g, l'indice carboxyle étant défini selon la norme DIN EN ISO 2114 ;
(B) de 20 à 90 % en poids d'au moins une résine liante sélectionnée dans le groupe constitué par une ou plusieurs résines liantes à fonctionnalité époxy et une ou plusieurs résines liantes à fonctionnalité hydroxyle,
(C) de 0 à 90 % en poids d'au moins un liant de résine et facultativement d'au moins un agent durcissant différent de (A) et (B), et
(D) de 0,1 à 60 % en poids de pigments, charges et/ou additifs de revêtement,
les quantités en % en poids étant basées sur le poids total de la composition de revêtement en poudre (A) à (D).

2. Composition selon la revendication 1, dans laquelle la résine de polyuretdione à fonctionnalité carboxyle a une masse molaire moyenne en nombre comprise dans la plage allant de 700 à 8000, la masse molaire moyenne en nombre étant déterminée par chromatographie par perméation de gel (GPC) avec du polystyrène réticulé avec du divinylbenzène en tant que phase immobile, du tétrahydrofurane en tant que phase liquide et des standards de polystyrène, comme défini selon la norme ISO 13885-1.

3. Composition selon les revendications 1 et 2, dans laquelle la résine de polyuretdione à fonctionnalité carboxyle a une température de fusion de 60 à 180 °C, dans laquelle la température de fusion n'est en général pas les points de fusion précis, mais à la place l'extrémité supérieure des plages de fusion avec une ampleur de 30 à 150 °C, déterminée par DSC (calorimétrie à compensation de puissance) à des vitesses de chauffage de 10 K/min selon la norme DIN 53765-B-10.

4. Composition selon les revendications 1 à 3, dans laquelle les uretdiones à fonctionnalité NCO basées sur des diisocyanates aliphatiques sont préférées.

5. Composition selon les revendications 1 à 4, dans laquelle l'acide succinique et/ou les anhydrides carboxyliques sont préférés en tant qu'acide(s) di- et/ou polyfonctionnels et/ou leur(s) anhydride(s).

6. Procédé pour le revêtement d'un substrat par application d'une composition de revêtement en poudre selon les revendications 1 à 5 sur le substrat et durcissement de la composition de revêtement en poudre appliquée.

7. Substrat revêtu avec la composition de revêtement en poudre selon les revendications 1 à 5.
